# EUROPÄISCHE PATENTSCHRIFT

(11) **EP 0 633 120 B1**
(45) Veröffentlichungstag und Bekanntmachung des Hinweises auf die Patenterteilung: **14.02.1996**
(21) Anmeldenummer: 94106230.9
(22) Anmeldetag: 21.04.1994
(51) Int. Cl.: B29C 47/36, B29C 47/92

(54) **Verfahren und Vorrichtung zum Herstellen von Blasformteilen**
Process and apparatus for the production of blow-moulded articles
Procédé et appareil pour la production d'objects moulés par soufflage

(30) Priorität: 29.06.1993 EP 93110314
(43) Veröffentlichungstag der Anmeldung: 11.01.1995
(73) Patentinhaber: GREGOR HOFBAUER GmbH, D-82152 Planegg (DE); Maag Pump Systems AG, CH-8023 Zürich (CH)
(72) Erfinder: Hofbauer, Peter, D-82266 Inning (DE); Herrmann, Jürgen, D-82152 Planegg (DE)
(74) Vertreter: Grünecker, Kinkeldey, Stockmair & Schwanhäusser Anwaltssozietät

(56) Entgegenhaltungen:
- EP-A- 0 003 110
- EP-A- 0 492 425
- EP-A- 0 567 164
- DE-A- 1 927 975
- DE-C- 4 301 935
- US-A- 3 245 115
- US-A- 3 674 404
- US-A- 5 049 325
- US-A- 5 071 604
- US-A- 5 122 315
- PATENT ABSTRACTS OF JAPAN vol. 13, no. 577 (M-910) (3925) 20. Dezember 1989 & JP-A-01 241 426 (ISHIKAWAJIMA HARIMA HEAVY IND.) 26. September 1989
- KUNSTSTOFFE, Bd.78, Nr.1, Januar 1988, MUNCHEN DE Seiten 27 - 33 BOLDER ET AL. 'zahnrad-schmelzpumpen in der extrusion'

## Beschreibung

Die Erfindung betrifft ein Verfahren der im Oberbegriff des Patentanspruchs 1 angegebenen Art und eine Vorrichtung gemäß Oberbegriff des Patentanspruchs 7.

Blasgeformte Körper aus thermoplastischem Kunststoff, wie Schalenkoffer, Kunststoffbehälter, Tanks, Fässer und dgl., werden in Blasformanlagen aus Vorformlingen hergestellt, die ein Speicherkopf taktweise extrudiert. Im Speicherkopf ist eine aus einem kontinuierlich arbeitenden Extruder füllbare Speicherkammer vorgesehen. Ein in der Speicherkammer in Ausschieberichtung antreibbarer Kolben arbeitet mit einer gesteuerten Formdüse zusammen, die sich öffnen, schließen und in ihrer Öffnungsweite verstellen läßt. Die zum Plastifizieren, Formen, Kühlen und Entformen jedes Körpers notwendige Arbeitszeit bestimmt die Takte des Speicherkopfes. Bei einem Co-Extrusions-Speicherkopf werden mehrere Speicherkammern aus ebensovielen Extrudern gefüllt.

Bei einem bekannten Verfahren wird die Speicherkammer des Speicherkopfes direkt aus dem Extruder gefüllt. Die Extruder-Ausstoßrate ist jedoch aufgrund vieler externer Einflüsse, z.B. aufgrund variierender Materialeigenschaften, variierendem Mischungsverhältnis (Neuware zu Regranulat), unterschiedlicher Verteilung der Temperatur entlang des Extruders, Temperaturschwankungen, Einzugsschwankungen und dgl., ungleichförmig. Die Füllmenge in der Speicherkammer wird von Takt zu Takt unterschiedlich. Auch treten Inhomogenitäten und eine ungleichförmige Dichteverteilung in der eingefüllten Menge auf. Durch Mengen-, Gewichts- und Längenschwankungen verschiebt sich das Wanddickenprofil. Dadurch sind die gewünschten Dick- und Dünnstellen im Vorformling relativ zur Blasform nicht am richtigen Ort plaziert und es kommt zu hohen Ausschußraten. Bei dem bekannten Verfahren wird beispielsweise das untere Ende jedes extrudierenden Vorformlings auf Erreichen einer bestimmten Position abgetastet, ehe die Blasform geschlossen wird. Erreicht der Vorformling die Abtastposition zu spät oder gar nicht, wird die Förderleistung des Extruders gesteigert, während bei überschießendem Vorformling die Förderleistung zurückgenommen wird. Trotzdem variiert das Gewicht der Vorformlinge bzw. die Menge des in jedem Vorformling enthaltenen Materials beträchtlich, weil diese Regelung wegen der langen Regelstrecke zwischen der Abtastposition und dem Extruderantrieb mit dem dazwischenliegenden, intermittierend arbeitenden Speicherkopf zu träge ist. Auch kann sich das durch die Steuerung der Formdüse vorgegebene Wanddickenprofil des Vorformlings in Extrusionsrichtung relativ zu der Blasform verlagern. Diese Nachteile resultieren aus der Zusammenarbeit zwischen dem Speicherkopf und dem Extruder, und sind auch bei der Mehrschichten- oder Co-Extrusion mit einem Co-Extrusionsspeicher- kopf (EP 0 536 438 A1) schwerwiegend, weil bei Mehrschichten-Vorformlingen eine besonders hohe Präzision der Schichtdickenstabilisierung und des Wanddickenprofils in jeder Schicht wichtig ist, um die Ausschußquote einzugrenzen.

Ein Speicherkopf hat jedoch, unter anderem wegen seiner intermittierenden Arbeitsweise und der exakten Steuerbarkeit des Wanddickenprofils, Vorteile gegenüber einer kontinuierlichen Extrusion oder einer Stop/Go-Extrusion ohne Speicherkopf.

Der Erfindung liegt die Aufgabe zugrunde, ein Verfahren der eingangs genannten Art zum Betreiben einer Blasformanlage mit einem Speicherkopf sowie eine Vorrichtung zum Durchführen des Verfahrens zu schaffen, mit denen die Ausschußquote erheblich verringerbar ist.

Die gestellte Aufgabe wird mit dem Verfahren gemäß Patentanspruchs 1 sowie mit der Vorrichtung gemäß Patentanspruch 7 gelöst.

Verfahrensgemäß wird der inhärente Nachteil des Extruders, die Speicherkammer für jeden Ausschiebetakt nicht mit derselben Menge und nicht mit einer homogenen Menge füllen zu können, durch die Maßnahme kompensiert, dem Speicherkopf den Materialstrom permanent mit konstanter volumetrischer Füll-Förderrate zuzuführen und die Zuführung auch während jedes Ausschiebetaktes gegen einen Stau aufrechtzuerhalten. Aufgrund der konstanten volumetrischen Füll-Förderrate wird der Speicherkammer für jeden Ausschiebetakt dieselbe Menge und homogen und mit exakt reproduzierbarer Kompression zugeführt. Die Füllung der Speicherkammer ist nicht mehr allein der Förderleistung des Extruders überlassen, sondern es wird verfahrensgemäß von außen eingegriffen, um aus dem Materialstrom vom Extruder durch konstant volumetrische Förderung für jeden Arbeitstakt dieselbe Materialmenge in die Speicherkammer zu bringen. Erstaunlicherweise hat sich gezeigt, daß eine exakte Mengedosierung möglich ist, obwohl die Förderung zum Speicherkopf auch während des Ausschiebetaktes aufrechterhalten bleibt und gegen einen Stau gefördert wird. Zweckmäßig ist es dabei, den aus dem Extruder austretenden Materialstrom mit einer für die konstante volumetrische Füll-Förderrate zum Speicherkopf ausreichenden Extruder-Förderrate bereitzustellen. Dies läßt sich einfach, z.B. durch eine Geschwindigkeitsregelung des Extruders, erreichen, und in einer relativ kurzen und deshalb schnell ansprechenden Regelstrecke. Mit dem Verfahren läßt sich die Ausschußquote beim Arbeiten mit einem einfachen Speicherkopf reduzieren, und auch beim Arbeiten mit einem Co-Extrusionsspeicherkopf, der Mehrschichtenvorformlinge erzeugt und gleichzeitig von mehreren Extrudern gespeist wird, deren Materialströme auf die vorerwähnte Weise der jeweiligen Speicherkammer permanent mit konstanter volumetrischer Füll-Förderrate zugeführt werden, wobei die Füll-Förderraten untereinander durchaus verschieden sein können. Das Verfahren ermöglicht ein ausschußarmes Betreiben einer Blasformanlage.

In der Vorrichtung dient primär nicht mehr der oder jeder Extruder als Füllaggregat für die Speicherkammer, sondern der Extruder braucht nur mehr der Schmelzepumpe den Materialstrom mit einer ausreichenden Extruder-Förderrate bereitzustellen, weil die permanent mit konstanter Drehzahl angetriebene und streng volumetrisch fördernde Schmelzepumpe die Speicherkammer mit konstanter volumetrischer Füll-Förderrate füllt und für jeden Ausschiebetakt dieselbe Materialmenge in die Speicherkammer bringt. Während des Ausschiebetaktes fördert die Schmelzepumpe gegen einen Stau. Überraschenderweise hat dies aber auf die Präzision der Mengendosierung keinen Einfluß, und zwar sowohl bei einem einfachen Speicherkopf, als auch bei einem Co-Extrusionsspeicherkopf.

Es ist zwar bei der kontinuierlichen Extrusion von Endlosprofilen aus Gummi oder Kunststoffen bekannt (EP 0 492 425 A1), vor dem Extrudermundstück eine volumetrisch fördernde Schmelzepumpe vorzusehen. Jedoch liegt dies zur Stromregelung nur bei kontinuierlicher Extrusion nahe, hingegen nicht beim intermittierenden Extrudieren aus einem Speicherkopf, zwischen dessen Takten Unterbrechungen auftreten.

Aus US-A-5 049 325 ist es bekannt, bei der diskontinuierlichen Füllung einer Kunststoff-Spritzform stromab eines Spritzkolbens und vor der Injektionsöffnung eine Zahradpumpe anzuordnen, die als Strommesser zum Messen und Regulieren der Strömungsrate benutzt wird. Diese Zahnradpumpe arbeitet im Stop/Go-Betrieb.

Bei einem aus JP-A-12 41 426 bekannten Verfahren zur Co-Extrusion mittels eines Speicherkopfes wird jeder aus einem Extruder austretende Materialstrom mittels eines Stromdetektors gemessen und die Steuerung der Extruder und der Kolben im Speicherkopf in Abhängigkeit von den Meßergebnissen vorgenommen. Die Stromdetektoren haben keinen direkten Einfluß auf die Füllmenge, da jeder Extruder als Füllaggregat zum Füllen seiner Speicherkammer dient.

Bei der Verfahrensvariante gemäß Anspruch 2 wird die konstante volumetrische Förderrate mit einer Schmelzepumpe erzeugt, die infolge ihrer konstanten Antriebsdrehzahl das dem Speicherkopf pro Zeiteinheit zugeführte Volumen praktisch ideal konstant hält und den Stau während jedes Ausschiebetaktes ohne Einfluß auf die Präzision der Mengendosierung beherrscht.

Bei der Verfahrensvariante gemäß Anspruch 3 wird auf einfache Weise sichergestellt, daß die zur präzisen Mengendosierung notwendige konstante volumetrische Füll-Förderrate eingehalten werden kann. Der Eingangsdruck der Schmelzepumpe ist eine leicht abtastbare Bedingung zum Regeln der Extruderförderleistung, die der Schmelzepumpe das bestimmungsgemäße Arbeiten ermöglicht. Da der Eingangsdruck der Schmelzepumpe praktisch der Ausgangsdruck des Extruders ist, läßt sich die Extruderförderleistung in einem sehr kurzen Regelkreis und rasch ansprechend regeln, weil nicht wie bisher üblich, die Förderleistung des Extruders erst am fertigen Vorformling überwacht wird, sondern gleich am Extruderausgang, so wird anhand des Eingangsdrucks der Schmelzepumpe auf Abweichungen unmittelbar durch Hochfahren oder Verringern der Förderleistung reagiert. Dies hat regelungstechnische Vorteile, weil die Regelung der Extruderförderleistung unabhängig vom Zusammenspiel zwischen der Schmelzepumpe und dem Speicherkopf bzw. dem Speicherkopf und der Blasform bewerkstelligt wird.

Bei der Verfahrensvariante gemäß Anspruch 4 wird die konstante volumetrische Füll-Förderrate gewinnbringend dazu benutzt, den Kolben nach dem Ausschiebetakt mit einer genau vorherbestimmbaren und reproduzierbaren Geschwindigkeit zurückzuschieben. Der Kolben erreicht seine Ausgangsposition für den Ausschiebetakt stets zum gleichen Zeitpunkt, was für die Steuerung der Blasformanlage vorteilhaft ist.

Im Hinblick auf erhöhte Betriebssicherheit ist die Verfahrensvariante gemäß Anspruch 5 zweckmäßig. Für den Fall, daß stromab der Schmelzepumpe eine Verfahrens- oder Betriebsstörung eintritt, ist der förderseitige Staudruck eine exakte Aussage zur Notwendigkeit einer Abschaltung.

Durch die streng volumetrische Füllung der Speicherkammer mit jeweils derselben Menge und unter derselben Kompression läßt sich gemäß Anspruch 6 der Verfahrensablauf präzisieren und lassen sich optimal kurze Taktzeiten ohne nennenswerte Sicherheitszugaben einstellen, was den Ausstoß erhöht und die Steuerung des Speicherkopfs vereinfacht.

Mit dem erfindungsgemäßen Verfahren läßt sich die Ausschußquote gegenüber der bisherigen Ausschußquote um den Faktor 10 verringern. War beispielsweise bisher eine Gewichtsschwankung der Vorformlinge (ca. 6kg Bruttogewicht) einer Serie von ± 150g in Kauf zu nehmen, dann läßt sich mit dem erfindungsgemäßen Verfahren die Gewichtsschwankung auf gut tolerierbare ± 15g für dieselben Vorformlinge reduzieren. Durch die präzise Mengendosierung, die Homogenität der Füllung, die gleichförmige Dichte- und Temperaturverteilung und die exakt reproduzierbare Kompression der Füllung bleibt das jeweilige Wanddickenprofil in der Vorgabe relativ zur Blasform, was auch diese Ausschußquelle eliminiert.

Die Ausführungsform der Vorrichtung gemäß Anspruch 8 ist baulich und montagetechnisch günstig. Eine Zahnradpumpe ermöglicht mit hoher Betriebssicherheit eine konstante volumetrische Füll-Förderrate, weil sie unabhängig vom Vor- oder Nachdruck die konstruktiv vorgegebene Förderrate erzeugt, vorausgesetzt, daß eingangsseitig stets eine die gewünschte Förderrate ermöglichende Materialmenge vorhanden ist. Bereits in Betrieb gewesene Blasformanlagen mit Speicherkopf lassen sich durch Einbauen dieser Baueinheit nachträglich umrüsten, um die Ausschußrate zu reduzieren.

Die Regelung der Extruder-Förderleistung ist bei der Ausführungsform gemäß Anspruch 9 einfach und schnell ansprechend. Der Eingangsdruck ist eine präzise Aussage zur Förderleistung des Extruders im Vergleich zum Verbrauch des Speicherkopfes.

Bei der Ausführungsform gemäß Anspruch 10 werden Schäden an den teuren Komponenten der Blasformanlage vermeidbar, da die Schmelzepumpe bei einer Störung abgeschaltet wird, die zu einer kritischen Überhöhung des Förderdrucks führt.

Bei der Ausführungsform gemäß Anspruch 11 wird die Formdüse geöffnet und der Ausschiebetakt des Kolbens eingeleitet, sobald der Kolben durch die mittels der Schmelzepumpe eingefüllte Materialmenge seine vorbestimmte Position erreicht hat, die gleichzeitig eine Aussage darüber liefert, daß exakt die vorbestimmte Materialmenge eingefüllt worden ist. Bei einem Co-Extrusionsspeicherkopf werden zweckmäßigerweise die verschiedenen Kolbenantriebe und Antriebe der Formdüsen synchron gesteuert.

Anhand der Zeichnung wird eine Ausführungsform des Erfindungsgegenstandes erläutert. Es zeigen:
- Fig. 1: schematisch eine Blasformanlage, und
- Fig. 2: einen Längsschnitt durch einen einfachen Speicherkopf, der in Fig. 1 nur schematisch angedeutet ist.

Nachfolgend wird das Verfahren zum Betreiben der Blasformanlage anhand der Darstellung einer Blasformanlage mit einem einfachen Speicherkopf beschrieben. Das Verfahren ist aber ebenso zum Betreiben einer Blasformanlage mit einem Co-Extrusionsspeicherkopf mit mehreren Speicherkammern, mehreren Kolben und entsprechend vielen Formdüsen und einer der Anzahl der aktiven Speicherkammern entsprechenden Anzahl von Extrudern anwendbar.

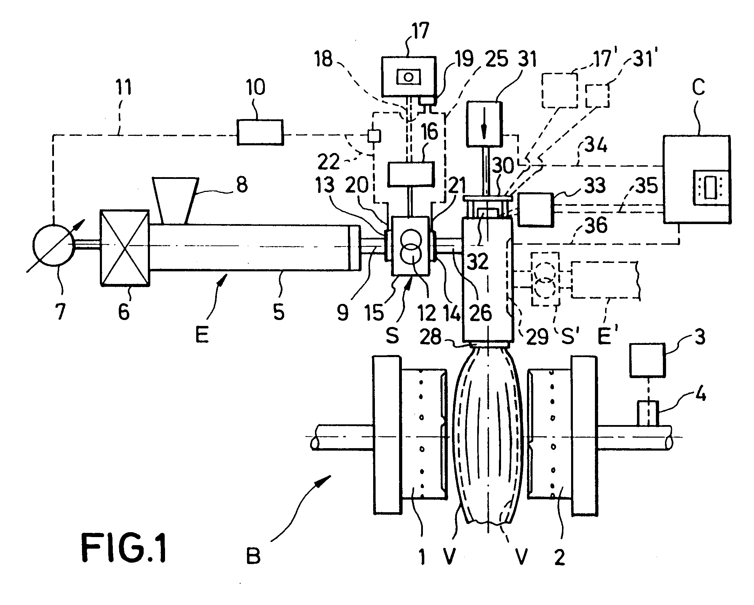

In einer Blasformanlage B gemäß Fig. 1 ist eine aus Formhälften 1, 2 bestehende Blasform vorgesehen, die über einen Antrieb 4 und eine Blassteuervorrichtung 3 bei jedem Arbeitstakt wenigstens einen blasgeformten Körper aus einem Vorformling V bildet. Der Vorformling V wird mit einem Speicherkopf K extrudiert, der aus einem Extruder E mit thermoplastischem Material beschickt wird. Der Extruder E besitzt einen Getriebeblock 6 und einen regelbaren Antrieb 7, der zum Verändern der Förderleistung des Extruders E beispielsweise drehzahlregelbar ist. Das Kunststoffausgangsmaterial wird über eine Einfüllvorrichtung 8 in den Extruder E eingebracht, innerhalb dessen Gehäuses 5 plastifiziert und durch einen Auslaß 9 gefördert.

Eine Regelvorrichtung 10 für die Extruderförderleistung ist über eine Leitung 11 mit dem Antrieb 7 verbunden. Zwischen dem Auslaß 9 und einer Verbindungsleitung 26 zum Speicherkopf K ist als Füllaggregat für den Speicherkopf K eine Schmelzepumpe S als Baueinheit eingesetzt, die in einem Gehäuse 15, z.B. zahnradartige, Förderorgane 12 enthält. Die Schmelzepumpe S ist mit Flanschen 13, 14 angeschlossen und wird von einem Antrieb 16 mit wählbarer, konstanter Drehzahl angetrieben. Eine Steuervorrichtung 17 dient zum Einstellen der Drehzahl der Schmelzepumpe S. Die Steuervorrichtung 17 ist mit dem Antrieb 16 über einen Verbindungsleitung 18 verbunden. Bei der Steuervorrichtung 17 kann eine Abschaltvorrichtung 19 vorgesehen sein.

An der Eingangsseite der Schmelzepumpe S ist ein Drucksensor 20 vorgesehen, mit dem der Eingangsdruck des Materialstroms zur Schmelzepumpe S abtastbar ist. Der Drucksensor 20 ist über eine Leitung 22 mit der Regelvorrichtung 10 signalübertragend gekoppelt und über eine Zwischenkomponente 23 und eine Leitung 24 auch an die Abschaltvorrichtung 19 angeschlossen. Zur Abschaltvorrichtung 19 führt ferner eine Verbindungsleitung 25 zu einem Drucksensor 21, der an der Förderseite der Schmelzepumpe S vorgesehen ist.

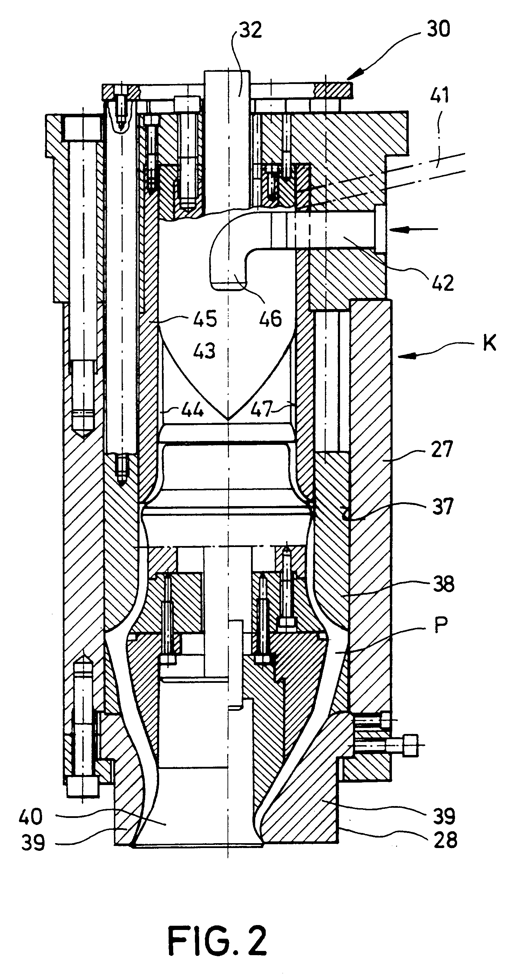

Der Speicherkopf K weist am unteren Ende seines Gehäuses 27 eine steuerbare Formdüse 28 (s. Fig. 2) auf und kann eine Kolbenhubabtastvorrichtung 29 für einen in Fig. 1 nicht gezeigten Ausschiebe-Kolben (45) in Fig. 2 enthalten. Mit 30 sind Antriebselemente für den Kolben angedeutet, die mit einem Antrieb 31 verbunden sind (Hydraulikantrieb), der den Kolben in Ausschieberichtung betätigt und in der Gegenrichtung frei bewegen läßt. Mit 32 ist das obere Ende eines Düsenkerns (40 in Fig. 2) angedeutet, der mittels eines Antriebs 33 und Verbindungsleitungen 41 über eine Steuervorrichtung C zum Öffnen, Schließen und Einstellen der Durchgangsweite der Formdüse 28 eingesetzt wird. Der Antrieb 33 (z.B. ein Hyraulikaggregat mit Steuerventil) ist über Steuerleitungen 35 mit der Steuervorrichtung C verbunden. An die Steuervorrichtung C ist ferner eine Leitung 36 von der Kolbenhub-Abtastvorrichtung 29 angeschlossen und eine Steuerleitung 34 zum Antrieb 31 des Kolbens. Mit der Steuervorrichtung wird ein vorwählbares Wanddickenprofil des Vorformlings V eingestellt und bei jedem Ausschiebetakt des Kolbens abgefahren. Handelt es sich bei dem Speicherkopf K um einen Co-Extrusionsspeicherkopf, dann ist wenigstens (strichliert angedeutet) ein weiterer Extruder E' über eine Schmelzepumpe S an den Speicherkopf angeschlossen. Für den weiteren Kolben und die diesem zugeordnete Formdüse sind eigene Antriebe 17', 31' vorgesehen. In diesem Fall enthält jeder Vorformling V einen weiteren Vorformling V1, weil mit dem Speicherkopf K gleichzeitig mehrere Schichten extrudiert werden.

Gemäß Fig. 2 ist im Speicherkopf K (einfacher Speicherkopf mit nur einem Kolben; kein Co-Extrusionsspeicherkopf mit mehreren Speicherkammern und mehreren Kolben und ebenso vielen Formdüsen) eine Zylinderbohrung 37 vorgesehen, in der ein hülsenförmiger Kolben 38 verschiebbar geführt ist. Am oberen Ende des Gehäuses 27 ragen die Betätigungselemente 30 für den Kolben 38 hervor, die an den Antrieb 31 angeschlossen sind. Am unteren Ende des Gehäuses 27 ist ein Düseneinsatz 39 festgelegt, der mit dem Düsenkern 40 zusammenarbeitet, der im Inneren der Zylinderbohrung 37 die Speicherkammer P begrenzt. Der Düsenkern 40 läßt sich über die Verbindungsleitungen 41 mittels des Antriebs 33 nach oben (Formdüse 28 schließen), nach unten (Formdüse 28 öffnen) und in Zwischenstellungen (Einstellung der Düsenweite) verstellen. Im unteren Ende des Düsenkerns 40 sind beiderseits der Mittelachse zwei verschiedene Ausführungsformen des Düsenkerns angedeutet.

Zur Speicherkammer P führt ein Einlaßkanal 42, der über die Verbindung 26 mit der Schmelzepumpe S verbunden ist.

Der Einlaßkanal 42 gabelt sich in zwei Endteile 46, die den Materialstrom an beide Seiten des Düsenkerns 40 leiten. Eine oder mehrere Doppelherz-Kurven 43 verteilen den Materialstrom gleichmäßig über den Umfang der Speicherkammer P. Das obere Ende des Düsenkerns 40 ist an der Innenwand 47 einer fest angeordneten Hülse 45 verschiebbar geführt, wobei ein Durchgangsspalt 44 zum sich erweiternden Teil der Speicherkammer P führt. Die Hülse 45 greift innen in den Kolben 38 ein.

Die Blasformanlage B wird wie folgt betrieben:
Die Schmelzepumpe K nimmt den aus dem Extruder E austretenden Materialstrom auf und führt Material permanent mit einer konstanten volumetrischen Füll-Förderrate dem Speicherkopf K zu. In der in Fig. 2 gezeigten Endposition des Kolbens 38 ist gerade ein Ausschiebetakt abgeschlossen, bei dem der Vorformling V gebildet wurde. Während des Taktes der Blasform 1, 2 (Formen, Abkühlen, Entformen und gegebenenfalls Reinigen) drückt der mit der konstanten und streng volumetrischen Füll-Förderrate zugeführte Materialstrom den Kolben 38 nach oben, wobei das Material homogen, mit gleichmäßiger Dichte- und Temperaturverteilung und einer exakt vorbestimmten Kompression die Speicherkammer P füllt, bis der Kolben 38 eine vorbestimmte Hubposition erreicht hat, die, z.B. über die Kolbenhub-Abtastvorrichtung 29, der Steuervorrichtung E übermittelt wird. Die Formdüse 28 ist während dieses Fülltaktes geschlossen. Auf diese Weise wird eine exakt vorbestimmte Materialmenge eingefüllt. Der Antrieb 31 ist passiv. Sobald die Steuervorrichtung C die Information über das Erreichen der vorbestimmten Kolbenhubposition erhalten hat, wird der Antrieb 31 aktiviert und wird über den Antrieb 33 auch die Formdüse 28 geöffnet.

Der Ausschiebetakt beginnt. Das in der Steuervorrichtung C voreingestellte Wanddickenprofil wird abgefahren. Während des Ausschiebetaktes fördert die Schmelzepumpe unverändert mit der streng volumetrischen konstanten Füll-Förderrate weiter Material zum Speicherkopf, jedoch gegen einen Stau, da der Ausschiebedruck des Kolbens die weitere Zufuhr von Material in die Speicherkammer P verhindert. Erst nach dem der Kolben 38 die in Fig. 2 gezeigte, untere Endposition erreicht hat und die Formdüse 28 wieder geschlossen wird, beginnt der Fülltakt von neuem. Um sicherzustellen, daß die Schmelzepumpe S permanent die in Hinblick auf die Taktzeit und die erforderliche Füllmenge vorbestimmte konstante volumetrische Füll-Förderrate einhalten kann, muß der Extruder E einen eine Unterversorgung vermeidenden Materialstrom bereitstellen. Dazu wird der Eingangsdruck der Schmelzepumpe S über den Drucksensor 20 abgetastet und als Referenz zum Regeln des Antriebs 7 des Extruders E benutzt. Für die vorbestimmte konstante volumetrische Füll-Förderrate der Schmelzepumpe ist ein bestimmter Eingangsdruckwert vorgewählt. Stellt der Drucksensor 20 ein Absinken des Eingangsdruckes von diesem Druckwert fest, dann wird über die Regelvorrichtung 10 die Antriebsdrehzahl des Antriebs 7 hochgefahren, bis der Druckwert wieder erreicht ist. Stellt der Drucksensor 20 hingegen eine Drucksteigerung über den Druckwert fest, dann wird die Antriebsdrehzahl des Antriebs 7 zurückgenommen. Sollte aufgrund nicht vorhersehbarer Einflüsse der Druckwert nicht zu halten sein, dann wird über die Abschaltvorrichtung 19 und die Steuervorrichtung 17 die Anlage oder werden zumindest die der Blasform 1, 2 vorgeschalteten Komponenten abgeschaltet.

Der Drucksensor 21 überwacht den Förderdruck der Schmelzepumpe S. Beim Fördern gegen den Stau während eines Ausschiebetaktes steigt der Förderdruck an. Die Abschaltvorrichtung 19 ist auf einen bestimmten Abschaltdruck eingestellt, der normalerweise während eines Staus nicht erreicht wird. Sollte aufgrund einer nicht vorhersehbaren Störung im Bereich des Speicherkopfes der Förderdruck über den Abschaltdruck ansteigen, dann wird die Anlage ebenfalls abgeschaltet.

Ist der Speicherkopf K ein Co-Extrusionsspeicherkopf, dann erfolgt die Füllung der wenigstens einen weiteren Speicherkammer auf genau dieselbe Weise aus dem weiteren Extruder E1 und der diesem nachgeschalteten Schmelzepumpe S'.

Die Schmelzepumpe S ist ein streng volumetrisch förderndes Aggregat, dessen Füll-Förderrate direkt von der Drehzahl abhängt, die für einen speziellen Vorformling in Abhängigkeit von der Taktzeit eingestellt und konstant gehalten wird.

Alternativ oder additiv läßt sich die Füllmenge der Speicherkammer auch über die Laufzeit der Schmelzepumpe S feststellen, da die Schmelzepumpe S pro Zeiteinheit stets das gleiche Volumen fördert. Eine Kolbenhubabtastung ist dann nicht unbedingt erforderlich. Bei einem Ausschiebe- bzw. Fülltakt braucht der Kolben 38 nicht zwangsweise seine volle, mögliche Hublänge zu fahren. Es ist möglich, den Kolben 38 bereits vor Erreichen der unteren Endstellung anzuhalten, oder beim Füllen nur über einen Teilhub hochzufahren.

Da mittels der Schmelzepumpe und der streng volumetrischen Förderung für jeden Ausschiebetakt exakt dieselbe Materialmenge in die Speicherkammer P einfüllbar ist, werden untereinander weitestgehend gleiche Vorformlinge extrudiert, in denen das gewünschte Wanddickenprofil exakt reproduzierbar vorliegt. Daraus resultieren eine außerordentlich niedrige Ausschußrate bei den blasgeformten Körpern und ein gegenüber herkömmlichen Blasformverfahren mit einem Speicherkopf deutlich gesteigerter Wirkungsgrad der Blasformanlage mit nahzu idealer Nutzung der eingesetzten Energie und des verarbeiteten Materials. Die Regelung des Extruders E ist einfach, weil zwischen der Abtastung des Eingangsdrucks mit dem Drucksensor 20 und dem regelbaren Antrieb 7 ein kurzer und geschlossener Regelkreis mit sauberem Ansprechverhalten und geringen Regelschwankungen geschaffen ist und der für die Regelung störende intermittierende Betrieb des Speicherkopfes K und der Blasform 1, 2 keine Rolle spielt.

## Patentansprüche

1. Verfahren zum Herstellen blasgeformter Körper aus thermoplastischem Material aus von einem einfachen oder einem Co-Extrusions-Speicherkopf intermittierend extrudierten Vorformlingen (V, V'), bei dem wenigstens eine eine taktweise zu öffnende Formdüse (28) aufweisende Speicherkammer (P) im Speicherkopf (K) aus einem Extruder (E, E') mit einem Materialstrom gefüllt wird und ein in der Speicherkammer (P) angeordneter Kolben (38) bei jedem Ausschiebetakt eine vorbestimmte Vorformlings-Materialmenge durch die Formdüse (28) extrudiert, **dadurch gekennzeichnet**, daß der aus dem Extruder (E, E') austretende Materialstrom mit einer für eine konstante volumetrische Füll-Förderrate zum Speicherkopf (K) ausreichenden Extruder-Förderrate bereitgestellt und davon ausgehend dem Speicherkopf (K) permanent und mit konstanter volumetrischer Füll-Förderrate zugeführt und während jedes Ausschiebetaktes gegen einen Stau gefördert wird.

2. Verfahren nach Anspruch 1, **dadurch gekennzeichnet**, daß der aus dem Extruder (E, E') austretende Materialstrom mittels einer dem Speicherkopf (K) vorgeschalteten, mit konstanter Drehzahl permanent angetriebenen, streng volumetrisch fördernden Schmelzepumpe (S) zum Speicherkopf (K) gefördert wird.

3. Verfahren nach den Ansprüchen 1 und 2, **dadurch gekennzeichnet**, daß der Eingangsdruck der Schmelzepumpe (S) in etwa an einem die konstante volumetrische Füll-Förderrate gewährleistenden Druckwert gehalten wird, und daß die Förderleistung, z.B. die Antriebsdrehzahl, des Extruders (E, E') mit dem Druckwert als Referenzgröße derart verändert wird, daß bei Abfallen oder Ansteigen des Eingangsdrucks relativ zu diesem Druckwert die Förderleistung des Extruders (E, E') gesteigert oder verringert wird, vorzugsweise innerhalb eines geschlossenen Regelkreises.

4. Verfahren nach einem der Ansprüche 1 bis 3, **dadurch gekennzeichnet**, daß der Kolben (38) in der Speicherkammer (P) nach jedem Ausschiebetakt mittels des Förderdrucks der Schmelzepumpe zurückgeschoben wird.

5. Verfahren nach wenigstens einem der Ansprüche 1 bis 4, **dadurch gekennzeichnet**, daß der Förderdruck der Schmelzepumpe (S) im Vergleich mit einem Abschalt-Druckwert überwacht wird, der höher als der förderseitige Staudruck beim Ausschiebetakt des Kolbens (38) eingestellt ist.

6. Verfahren nach wenigstens einem der Ansprüche 1 bis 5, **dadurch gekennzeichnet**, daß die Speicherkammer-Füllmenge eingestellt wird, und daß der Ausschiebetakt des Kolbens (38) und das Öffnen der Formdüse (28) bei Erreichen einer von der Füllmenge abhängigen Kolbenhubstellung eingeleitet werden.

7. Vorrichtung zum Blasformen von Körpern aus thermoplastischen Vorformlingen (V, V'), mit wenigstens einem Extruder (E, E'), mit wenigstens einem dem Extruder nachgeordneten, wenigstens eine Speicherkammer (P), einen darin zu jeweils einem Ausschiebetakt antreibbaren Kolben (38) und eine zum Extrudieren der Vorformlinge taktweise zu öffnende Formdüse (28) aufweisenden einfachen oder Co-Extrusions-Speicherkopf (K), **dadurch gekennzeichnet**, daß zwischen dem Speicherkopf (K) und jedem Extruder (E) als Füllaggregat für die Speicherkammer (P) eine permanent mit konstanter Drehzahl angetriebene, streng volumetrisch fördernde Schmelzepumpe (S) vorgesehen ist.

8. Vorrichtung nach Anspruch 7, **dadurch gekennzeichnet**, daß die Schmelzepumpe (S) eine Zahnradpumpe mit eigenem Antrieb und Getriebe (16) ist, die als Baueinheit herausnehmbar in eine vom Extruder (E) zum Speicherkopf (K) führende Verbindung (9, 26) eingesetzt ist.

9. Vorrichtung nach Anspruch 7, **dadurch gekennzeichnet**, daß an der Eingangsseite (13) der Schmelzepumpe (S) ein Drucksensor (20) für den Eingangsdruck vorgesehen und mit einer Regelvorrichtung (10) für den Extruderantrieb (7) derart verbunden ist, daß die Antriebsgeschwindigkeit des Extruders (E) zum Einhalten eines vorbestimmten Eingangsdruckwerts veränderbar ist.

10. Vorrichtung nach Anspruch 7, **dadurch gekennzeichnet**, daß an der Ausgangsseite (14) der Schmelzepumpe (S) ein Drucksensor (21) für den Förderdruck der Schmelzepumpe (S) vorgesehen und mit einer förderdruckabhängigen Abschaltvorrichtung (19) des Schmelzepumpen-Antriebs (16) verknüpft ist.

11. Vorrichtung nach Anspruch 7, **dadurch gekennzeichnet**, daß eine Steuervorrichtung (C) für den Speicherkopf (K) vorgesehen ist, an die ein Kolbenhubmelder (29), ein Kolbenantrieb (31) und ein Antrieb (33) zum Öffnen und Schließen der Formdüse (28) und zum Verändern der Formdüsen-Öffnungsweite angeschlossen sind.

## Claims

1. Process for the production of blow-moulded articles of thermoplastic material from preforms (V,V') intermittently extruded from a single-die or a co-extrusion accumulator head, in which process at least one accumulator chamber (P) in the accumulator head (K), having a moulding die (28) to be opened intermittently, is filled from an extruder (E,E') with a stream of material and a ram (38) arranged in the accumulator chamber (P) extrudes a predetermined amount of preform material through the moulding die (28) with every expulsion stroke, characterized in that the stream of material emerging from the extruder (E,E') is provided at a extruder delivery rate adequate for a constant volumetric filling delivery rate to the accumulator head (K) and, on this basis, is fed to the accumulator head (K) permanently and at a constant volumetric filling delivery rate and is delivered during each expulsion stroke against a back pressure.

2. Process according to Claim 1, characterized in that the stream of material emerging from the extruder (E,E') is delivered to the accumulator head (K) by means of a melt pump (S) which is arranged upstream of the accumulator head (K), is permanently driven at constant rotational speed and delivers strictly volumetrically.

3. Process according to Claims 1 and 2, characterized in that the input pressure of the melt pump (S) is kept approximately at a pressure value ensuring the constant volumetric filling delivery rate, and in that the delivery performance, for example the rotational drive speed, of the extruder (E,E') is varied with the pressure value as a reference variable in such a way that, when the input pressure falls or rises in relation to this pressure value, the delivery performance of the extruder (E,E') is increased or reduced, preferably within a closed control loop.

4. Process according to one of Claims 1 to 3, characterized in that the ram (38) is pushed back in the accumulator chamber (P) after each expulsion stroke by means of the delivery pressure of the melt pump.

5. Process according to at least one of Claims 1 to 4, characterized in that the delivery pressure of the melt pump (S) is monitored in comparison with a cut-out pressure value, which is set higher than the dynamic pressure on the delivery side during the expulsion stroke of the ram (38).

6. Process according to at least one of Claims 1 to 5, characterized in that the accumulator-chamber filling rate is set, and in that the expulsion stroke of the ram (38) and the opening of the moulding die (28) are initiated upon reaching a ram stroke position dependent on the filling rate.

7. Apparatus for blow-moulding articles from thermoplastic preforms (V,V') having at least one extruder (E,E') and having at least one single-die or coextrusion accumulator head (K) which is arranged downstream of the extruder and has at least one accumulator chamber (P), a ram (38) which can be driven therein to perform in each case an expulsion stroke and a moulding die (28) opening intermittently for the extruding of the preforms, characterized in that between the accumulator head (K) and each extruder (E) there is provided as a filling unit for the accumulator chamber (P) a melt pump (S) which is driven permanently at constant rotational speed and delivers strictly volumetrically.

8. Apparatus according to Claim 7, characterized in that the melt pump (S) is a gear pump with its own drive and gear mechanism (16), which is fitted removably as a module into a connection (9, 26) leading from the extruder (E) to the accumulator head (K).

9. Apparatus according to Claim 7, characterized in that, on the input side (13) of the melt pump (S), a pressure sensor (20) is provided for the input pressure and is connected to a control device (10) for the extruder drive (7) in such a way that the drive speed of the extruder (E) is variable for maintaining a predetermined input pressure value.

10. Apparatus according to Claim 7, characterized in that, on the output side (14) of the melt pump (S), a pressure sensor (21) is provided for the delivery pressure of the melt pump (S) and is linked to a delivery-pressure-dependent cut-out device (19) of the melt-pump drive (16).

11. Apparatus according to Claim 7, characterized in that a control device (C) is provided for the accumulator head (K), to which device a ram-stroke sensor (29), a ram drive (31) and a drive (33) for opening and closing the moulding die (28) and for varying the moulding-die orifice width are connected.

## Revendications

1. Procédé de production d'objets moulés par soufflage, en matériau thermoplastique, à partir de préformes (V,V') extrudées, par intermittence, d'une tête à accumulation simple ou d'une tête à accumulation à co-extrusion, dans le cas duquel au moins une chambre d'accumulation (P), située dans la tête à accumulation (K) et présentant une buse de moulage (28) à ouvrir de façon cadencée, est remplie d'un flux de matériau provenant d'une extrudeuse (E,E') et dans le cas duquel, à chaque étape de course utile sortante, un piston (38) disposé dans la chambre d'accumulation (P) extrude par la buse de moulage (28) une quantité de matériau de préforme prédéterminée, caractérisé par le fait que le flux de matériau sortant de l'extrudeuse (E,E') est mis à disposition avec un débit de l'extrudeuse suffisant pour envoyer à la tête à accumulation (K) un débit volumétrique constant de remplissage et que, partant de là, il est envoyé à la tête à accumulation (K) en permanence et à débit volumétrique constant de remplissage et que, pendant chaque étape de course utile sortante, il est envoyé à l'encontre d'une contre-pression.

2. Procédé selon la revendication 1, caractérisé par le fait que le flux de matériau sortant de l'extrudeuse (E,E') est envoyé à la tête à accumulation (K) au moyen d'une pompe à bain de fusion (S) placée en amont de la tête à accumulation (K), entraînée en permanence a vitesse de rotation constante et a déplacement strictement volumétrique.

3. Procédé selon les revendications 1 et 2, caractérisé par le fait que l'on maintient la pression d'entrée de la pompe à bain de fusion (S) à peu près à une valeur de pression garantissant le débit volumétrique constant de remplis sage et que, avec la valeur de la pression comme grandeur de référence, on modifie le débit possible, par exemple la vitesse de rotation d'entraînement, de l'extrudeuse (E,E') de façon telle qu'en cas de décroissance et de croissance de la pression d'entrée par rapport à cette valeur de la pression, le débit possible de l'extrudeuse (E,E') croît ou décroît, de préférence à l'intérieur d'une boucle de régulation fermée.

4. Procédé selon l'une des revendications 1 à 3, caractérisé par le fait qu'après chaque étape de course utile sortante, le piston (38) est reculé dans la chambre d'accumulation (P) au moyen de la pression de refoulement de la pompe à bain de fusion.

5. Procédé selon au moins l'une des revendications 1 à 4, caractérisé par le fait que la pression de refoulement de la pompe à bain de fusion (S) est surveillée par comparaison avec une valeur de la pression de mise hors circuit que l'on prescrit supérieure à la contre-pression qui règne, côté refoulement, lors de l'étape de la course utile sortante du piston (38).

6. Procédé selon au moins l'une des revendications 1 à 5, caractérisé par le fait que l'on prescrit la quantité de remplissage de la chambre d'accumulation et que l'étape de la course utile sortante du piston (38) et l'ouverture de la buse de moulage (28) sont déclenchées lorsqu'est atteinte une position de la course du piston fonction de la quantité de remplissage.

7. Appareil pour le moulage, par soufflage, d'objets à partir de préformes thermoplastiques (V,V'), comportant au moins une extrudeuse (E,E') et une tête à accumulation (K), simple ou à coextrusion, disposée après l'extrudeuse, présentant au moins une chambre d'accumulation (P), un piston (38) qui peut y être entraîné à chaque étape de course utile sortante et une buse de moulage (28) à ouvrir de façon cadencée pour l'extrusion des préformes, caractérisé par le fait qu'entre la tête à accumulation (K) et chaque extrudeuse (E) est prévue, en tant que groupe de remplis sage pour la chambre d'accumulation (P), une pompe à bain de fusion (S) entraînée en permanence à vitesse de rotation constante et à déplacement strictement volumétrique.

8. Appareil selon la revendication 7, caractérisé par le fait que la pompe à bain de fusion (S) est une pompe à engrenages avec mécanisme d'entraînement et réducteur propres (16), qui est placée, avec possibilité d'être enlevée sous forme d'un ensemble, sur une conduite (9, 26) conduisant de l'extrudeuse (E) à la tête à accumulation (K).

9. Appareil selon la revendication 7, caractérisé par le fait que du côté entrée (13) de la pompe à bain de fusion (S), un détecteur de pression (20) pour la pression d'entrée est prévu et relié à un dispositif de régulation (10) pour le mécanisme d'entraînement (7) de l'extrudeuse de façon telle que la vitesse d'entraînement de l'extrudeuse (E) peut être modifiée pour maintenir une valeur prédéterminée de la pression d'entrée.

10. Appareil selon la revendication 7, caractérisé par le fait que du côté sortie (14) de la pompe à bain de fusion (S) un détecteur de pression (21) pour la pression de refoulement de la pompe à bain de fusion (S) est prévu et relié à un dispositif (19), de mise hors circuit du mécanisme d'entraînement (16) de la pompe à bain de fusion en fonction de la pression de refoulement.

11. Appareil selon la revendication 7, caractérisé par le fait qu'est prévu, pour la tête à accumulation (K), un dispositif de commande (C) auquel sont reliés un indicateur (29) de la course de piston, un mécanisme d'entraînement (31) du piston et un mécanisme d'entraînement (33) pour ouvrir et fermer la buse de moulage (28) et modifier la dimension de l'ouverture de la buse de moulage.
